# EUROPEAN PATENT APPLICATION

(11) **EP 2 565 226 A1**
(43) Date of publication of application: **06.03.2013**
(21) Application number: 11464024.6
(22) Date of filing: 15.12.2011
(51) Int. Cl.: C08J 11/22, C08J 11/24, C08G 18/42

(54) **Method of obtaining aromatic polyester-ether polyols from waste poly (ethylene terephthalate) (PET) and aromatic polyester-ether polyols incorporating poly(ethylene terephthalate) wastes and renewable materials, obtained by respective procedure**

(30) Priority: 29.08.2011 RO 201100597
(71) Applicant: Institutul National de Cercetare Dezvoltare Pentru Chimie si Petrochimie - Icechim, 060021 Buceresti sectorul 6 (RO)
(72) Inventor: Duldner, Monica Mirela, Bucuresti, Sectorul 2 (RO); Iancu, Stela, Bucuresti, Sectorul 1 (RO); Capitanu, Stela, Bucuresti, Sectorul 6 (RO); Ionescu, Mihail, Bucuresti, Sectorul 1 (RO); Apostol, Steluta, Bucuresti, Sectorul 5 (RO)

(57) **Abstract**

The present invention refers to an economical and ecological process for obtaining aromatic polyester-ether polyols suitable for rigid polyurethane foams formation, using as raw materials polyethylene terphthalate wastes and, in some alternatives, a material derived from biomass, consisting of: (1) glycolysis of polyethylene terephthalate wastes, resulted from soft-drink postconsuming bottles, with aliphatic polyols or polyoxyalkylene glycols with low molecular weights, in presence of transesterification catalysts; (2) partial esterification of aromatic polycarboxylic acids cyclic anhydrides with glycolysis products resulted from previous reaction stage (1), until the acid number reaches a particular value corresponding to a single carboxyl group full esterification (anhydride ring opening addition); (3) alcoxylation of the reaction mixture obtained in stage (2), up to a designed hydroxyl number, in presence of base catalysts (tertiary amines) and to an aromatic polyester-ether polyol obtained by some alternatives of the respective procedure, incorporating 20 - 30 % mol. moieties derived from PET wastes and 10-20% mol. moieties derived from isosorbide, and which can replace up to 30% wt. of the polyol component in rigid polyurethane foam formulations.

## Description

### TECHNICAL FIELD

The invention relates to a procedure for obtaining aromatic polyester-ether polyols, which stands, in the same time, as a chemical recycling process of polyethylene terephthalate wastes and which, in some alternatives involves a diol derived from biomass, procedure which intends to provide polyester polyols with a high rigid aromatic content and, in some alternatives, with additional rigid bicyclic structural units, as well as with other designed properties, making them suitable to be used in the formation of rigid polyurethane foams, with thermal insulating properties, high temperature rezistance, low flammability, low smoke emission, resistance to chemicals, rigid foams with multiple application in construction (sandwich panels, doors and windows), industrial plants and pipelines, transport (thermal insulation, insulation for refrigeration rooms), electrical and electronics field, consumer goods, industrial and household appliances (water heaters, refrigerators, freezers, counters operating at low temperature).

### BACKGROUND ART

The concept of sustainability, increasingly used in recent years, involves, in essence, to interact in ways that do not adversely affect the living systems and natural resources, in particular by eliminating wastes, removing toxic emissions and use of raw materials derived from renewable resources, thereby those derived from fossil fuels.

Since Polyethylene terephthalate, hereinafter called PET, is a polymer with large scale applications, especially for the manufacture of soft drink bottles, and due to the fact that it is not a biodegradable polymer, enormous amounts of wastes are accumulating, consequently inducing a huge interest for recycling this material.

There are several ways known to recycle PET. Among them, chemical recycling is extensively investigated in recent years because it is, in the greatest extent, consistent with the principles of sustainability. Obtaining polyester polyols by PET glycolysis in presence of various glycols, is known in the field. The major disadvantage of these polyols, reported to their use for making polyurethane foams, is that they precipitate at ambient temperature storage and display, in addition, a large heterogeneity of molecular weight dispersion, containing a high percentage of free glycols with low molecular weight, which leads to the formation of irregular three-dimensional networks.

Some procedures cut out these shortcomings by: esterification of the resulting glycolysis products with dicarboxylic aliphatic/aromatic acids or their derivatives - as disclosed for example in U.S. Pat. 4,539,341 (Hallmark) - and, moreover, by free glycols removal by distillation, performed at low temperature and high vacuum, in order to avoid their reformation by restoring chemical equilibrium, at the end of glycolysis - esterification reactions, - as disclosed in U.S. Pat. 6,573,304 (Durand, et al.). These procedures, however, present the disadvantage of requiring a distinct stage of fully esterification between carboxylic acids or derivatives and glycolysis products , which involves high reaction temperatures (240 °C), long enough time (about 6 hours) and leads to formation of by-products: methanol or water, whose complete removal out of the reaction system is quite difficult. Furthermore, resulted by-products raise problems regarding their separation and recovery. Other patents, for example U.S. Pat. 4,701,477 (Altenberg), propose ethoxy-propoxylation of the glycolysis products. However, these procedures require a purification step of the polyols, for removal of the residual strong base catalyst used, preferably potassium hydroxide or sodium acetate and lead to an advanced polyester cleavage degree, up to bis hydroxyalkyl terephthalate.

Procedures for obtaining polyester-ether polyols for rigid polyurethane foams by monoesterification or partial esterification of aromatic anhydrides with alkylene glycols or polyols, followed by alkoxylation, are quoted in Pat. RO 92 366 (Ionescu et.al), U.S. Pat. 6,569,352 (Hillshafer, et al). However, these procedures do not use PET waste as a raw material.

In the context of environmentally friendly interaction, there is, on the other hand, a great interest in producing biological products based materials, as an alternative to the use of petrochemical raw materials. Diol 1,4:3,6-dianhydrosorbitol, known as isosorbide, is obtained from polysaccharides derived from grain and has very convenient properties for use as a co-monomer, properties consisting mainly in the chirality and rigidity of the molecule, which impart special properties to polymers in which it is incorporated, and complete lack of toxicity.

Co-polyesters containing structural units deriving from aromatic dicarboxylic acids and isosorbide exhibit particular thermal properties (glass transition temperatures, thermo-stability), due to beneficial association of these two monomers with rigid structure. Co-polyesters derived from terephthalic acid, ethylene glycol and isosorbide, optionally toghether with other diols and aromatic dicarboxylic acids, were obtained by different procedures described for example in U.S. Pat. 6,737,481 (Kurian et al.), WO/2006/032022 (Charbonneau). The performed incorporation rate of isosorbide within copolyester backbone structure is somewhere between 50% and 70% mol. and PET was not used as raw material.

It is also known a process for obtaining some copolyesters containing isosorbide , ethylene glycol and terephtaloyl moieties, reported in U.S. Pat. 6,818,730 (Brandenburg et al.), prepared by melt transesterification of a polymer which contains no isosorbide (exemplified for PET) with an isosorbide containing polymer. This method requires however a previous preparation of an isosorbide containing copolyester, and leads to a high molecular weight polymer, designed for processing by extrusion or injection.

One of the main applications of polyols in polymer synthesis is in polyurethanes manufacture, where high reactivity of isocyanates can balance the weaker reactivity of 1,4:3,6-dianhydrohexitols, which could be even an advantage for their use as chain extenders for various types of the prepolymers, as it is proposed in DE Pat. 3,111,093 (Meyborg et al.), U.S. Pat.4,443,563 (Dirlikov and Schneider). These procedures refer only to isosorbide use in polyurethane materials manufacture, as it stands. 1,4:3,6-dianhydrohexitol derivatives are reported in literature as being used as monomers for the synthesis of polyurethanes. Thus, U.S. Pat.6,608,167 (Hayes et al.) describes the use of bis(2-hydroxyethyl) isosorbide, obtained by isosorbide chemical modification with ethylene oxide or ethylene carbonate. U.S. Pat. Appl. 20100280218 (Wagener et al.) cites the use of reactive intermediates, resulted from the reaction of isosorbide with an acrylate, acid or amine, U.S. Pat. Appl. 20100029799 (Atsushi) refers to polyether-polyols obtained through dehydration-polycondensation reactions of glycerol and of another mono or dihydric alcohol, in which case isosorbide it cited. Isosorbide containing intermediates described in the procedures mentioned above do not involve polyethylene terephthalate waste as raw material.

### DISCLOSURE OF THE INVENTION

Main goals of the present invention are: achieving a procedure for some aromatic polyester-ether polyols preparation using PET wastes as raw materials (standing in the same time as a recycling procedure thereof) and, in some alternatives, involving a diol derived from biomass, procedure which is economical in terms of energy consumption, does not release any residues or by-products and simultaneously provides to the resulted polyester-ether polyols certain designed properties, required for polyurethane foams formation.

In order to obtain aromatic polyester-polyols incorporating PET residues and renewable materials, in some alternatives of the present procedure, it was considered in addition, achieving of certain chemical structures containing rigid units associations, namely rigid structural units developed from esterification of aromatic polycarboxylic acids with isosorbide, therefore improving physico-mechanical and thermal properties of rigid polyurethane foams.

The process of obtaining aromatic polyester-ether polyols according to the present invention overcome the disadvantages aforementioned in the state of the art, by the specific sequence of set up operations, as follows: (1) glycolysis of PET wastes with aliphatic polyols or polyoxyalkylene glycols with low molecular wieght, at a molar ratio between polyols and PET of: 1.1-2 : 1, in presence of tetraisopropyl or tetrabutyl titanate catalysts, molar ratio reported to PET ranging between 0.05 and 0.5%, at temperatures between 190-220°C, under atmospheric pressure, for 3-6 hours, provides incorporation of PET waste in the backbone of the final product, the PET waste depolymerization degree requested to be suitable in the final products and, consequently, the pursued properties of polyester-ether polyols and, when the polyol optionally used for glycolysis is 1,4:3,6-dianhydrosorbitol, the procedure provides the formation of chemical structures containing rigid structural units, developed from esterification reaction of aromatic polycarboxylic acids with isosorbide; (2) partial esterification of cyclic anhydrides of aromatic polycarboxylic acids with products resulted from the 1st reaction stage, at a molar ratio between anhydride and PET of 0 -2.8 : 1, at reaction temperatures between 120 and 140°C and under atmospheric pressure, to achieve an acid number corresponding to complete esterification of a single carboxylic group (by anhydride ring opening addition), provides incorporation of structural units of the respective acids within polyester-ether polyols structure, diminishing the amount of free glycols resulted from glycolysis, as well as development of new ester bonds between rigid aromatic structural moieties of these acids and isosorbide, when this glycol is used as raw material, avoidance of by-products formation and even dehydration of reaction mixture, since not only does not lead to water release but, on the contrary, traces of water are consumed quickly, takes place in a short period of time with minimal heating, the reactions being slightly exothermic; (3) alkoxylation of the reaction mixture obtained in stage (2), at molar ratio between alkylene oxide and PET of 1- 10: 1, in presence of base catalysts (tertiary amines) used at a ratio of 0.5- 1% wt., based on esters mixture, at temperatures between 110 and 120 °C and under 2-5 atm. pressure, which leads to full esterification of free carboxyl groups, ensuring the achievement of a very low acid number, as well as development of polyols with polyester-ether structure, leading to a designed hydroxyl index and viscosity decrease and providing compatibility between polyester-ether polyols and polyether polyols known as commonly being used in rigid polyurethane foams, considering that the process occurs at relatively low temperature and with minimal heating (slightly exothermic reactions), and does not lead to formation of any by-product that requires removal from the reaction system; this particular sequence of reactions provides, in addition, the complete incorporation of raw materials into final products, the chemical composition of reaction products being fully suitable for reaction with diisocyanate to form polyurethane rigid foams. Polyester-ether polyols according to the present invention overcome the disadvantages aforementioned in the state of the art by consisting of : terephthalic moieties (derived from PET wastes) between 25 and 100% mol. based on total acid component, other dicarboxylic or polycarboxylic aromatic acids between 0 and 75% mol. based on total acid component, ethylene glycol moieties (derived from PET wastes) between 8 and 15 % mol. based on total glycolic component, other aliphatic linear or branched diols or polyoxyalkylene glycol with low molecular weight moieties between 68 and 80 % mol., based on total glycolic component and rigid moieties of 1,4:3,6-dianhydrosorbitol (isosorbide), derived from biomass), between 10 and 18 % mol., based on total glycolic component, out of which minimum 60% mol. of structural units have at least one hydroxyl group esterifed with aromatic di or poly-carboxylic acids, therefore leading to rigid structural units formation, while holding the required characteristics for rigid polyurethane foams manufacture, namely: average molecular weight below 1000 g/mol, hydroxyl number between 120-220 mg KOH / g, acid number less than 0.2 mg. KOH/g, water content less than 0.5% wt. and free glycols with low molecular weight content less than 10% wt, are compatible with polyether-polyols commonly used in rigid polyurethane foams, forming together long time stable and homogeneous mixtures, and can be used up to 30% wt. of the polyol component in rigid polyurethane foams formulations, leading in the same time to physical, mechanical and thermal properties improvement thereof.

By applying the present invention the following advantages could be attained :
- Reducing the consumption of raw materials derived from oil processing, by using a significant amount (20-30% wt. from the final composition of polyester-ether polyols) of polymer wastes which accumulate in large quantities and are not biodegradable and, in some alternatives, raw materials deriving from biomass (15 -30% wt. of the final polyester-ether polyols);
- Efficiency of polyester-ether polyols synthesis process increasing, by succeeding in incorporating the entire amount of reactants, without any losses, within the final product's chemical structure;
- Avoiding by- products and waste generation, which could create problems of separation, recovery or disposal;
- Reducing energy consumption by replacing energy-intensive consumption reactions (i.e. full esterification) with ones that take place at much lower temperatures, consuming therefore smaller amounts of thermal energy, and / or are slightly exothermic (i.e. anhydride ring opening addition, alkoxylation);
- Diversification of polyester-ether polyols intermediates for polyurethane foams assortments, by achieving a product which incorporates a recycled polymer waste and, in some alternatives, a diol derived from biomass and, in the same time, leading to improvement of some physical, mechanical and thermal properties of the rigid polyurethane foams.

### DETAILED DESCRIPTION OF THE INVENTION

The method for obtaining polyester-ether polyols from PET wastes described in the present patent application is a melt glycolysis-esterification-alkoxylation procedure.

For the physico-chemical and structural characterization of the polyester-ether polyols, the following methodes were used:

The Acid number (I_{A}) of the polyester-ether polyols was determined according to ASTMD-4662 -98 : Standard methods for testing raw materisls for polyurethanes - Determination of acidity and alcalinity of polyols.

The Hydroxyl number (I_{OH}) of the polyester-ether polyols was determined according to ASTM-D4274-05: Standard methods for testing raw materials for polyurethanes - Determination of hydroxyl number of polyols.

For average molecular weight calculation, the end-groups method was used, adopting the values of acid number and hydroxyl number determined according to the methods above mentioned, without considering the free glycols contribution.

The humidity content (%) was determined by Karl - Fischer method, according to ASTM-D4672-05-Standard methods for testing raw materials for polyurethanes -Determination of water content of polyols.

The free glycols content (% wt.) was determined by gas-cromatography of acetylated samples of poly - ester-ether polyols, on a Carlo Erba gas cromatograph, model 2450, with capillary quartz column filled with stationary phase methyl-phenyl silicone (5% phenyl).

The viscosity of the polyols was determined according to ASTM-D4878-03- Standard methods for testing raw materisls for polyurethanes -Determination of polyols viscosity.

¹H-RMN spectra of the polyols and samples processed by acetylation and separated by fractionating column cromatography, were recorded on a Varian Gemini 300 with superconductor magnet spectrophotometer.

### Example 1

A stainless steel polycondensation reactor of 1000 cm³ capacity, fitted with a jacket with electrically heated agent, temperature controller, anchor stirrer with 60-70 rpm. speed, nitrogen gas-introducing tube, manometer and heated partial reflux condenser connected to a distillate collecting vessel, was charged with 212 g (2 moles) diethylene glycol (DEG) - commercial product - and 0.096 g (0.1 ml) tetraisopropyl titanate - commercial product, catalyst. The condenser was heated to a temperature of 100 -120 °C and, under inert atmosphere (nitrogen), the reaction mixture was heated to 100 °C. 192 g (1 mole) polyethylene terephthalate (PET) waste flakes derived from post-consuming bottles were charged, having the following main physical-chemical characteristics: granulation ∼ 5/5 mm, molecular weight ∼ 40,000, melting range 254-260°C, I _{OH}: 2.5 - 3 mg KOH/g, moisture < 0 2%. Under inert atmosphere (N₂), the temperature was raised and maintained at 190- 220°C, at total reflux, for about 3 h.. After decreasing the temperature at 140 °C, 148 g (1 mol) phthalic anhydride (PA) - commercial product- was charged into the reactor. The temperature was maintained at 120-140 °C for 1.5 h., until an Acid number of about 103 mg KOH/g. was attained.

In a stainless steel polycondensation reactor of 1300 cm³ capacity, suitable for reactions with alkylene oxides, maximal working pressure 10 atm, equipped with heating jacket, cooling serpentine with water inside, turbine stirrer with 6 pallets, with 280-540 rpm. speed, nitrogen inlet tube, pressure equalization valve, descendant condenser, temperature controller, manometer, supply vessel for alkylene oxide with 500-1000 cm³ capacity, 300 grams of ester previously obtained were charged, together with 1.5 g 1,4-diazabicyclo[2.2.2]octane (DABCO) - commercial product, catalyst. Under inert atmosphere (N₂) the temperature was rised to 110 - 120°C and about 125 g (150 ml) propylene oxide (PO) -commercial product - were introduced in portions, maintaining a working pressure of 2-3 atm., during about 3 h, followed by an afterreaction for about 3 h. and degassing 1h at 0.2 atm. for removing unreacted propylene oxide. The final product did not require purification. After evacuation, the polyester-ether polyol was filtered on a metallic filter of 0.75 mm. About 365 g polyester-ether polyol P1, light brown-yellow coloured, were obtained.

### Example 2

The procedure followed in Example 1 was repeated, except that the quantity of DEG used in the glycolysis reaction was 190,8 g (1,8 moles), and the Acid number of the reaction mixture, after the esterification reaction, was of about 109 mg KOH / g. About 390 g polyester-ether polyol P2, light brown-yellow coloured, were obtained.

### Example 3

The procedure followed in Example 1 was repeated, except that a mixture of 106 g (1mole) DEG and 134 g (1 mole) dipropylene glycol (DPG) - commercial product- were used for the glycolysis reaction, the Acid number of the reaction mixture, after the esterification reaction, was of about 104 mg KOH/g. and in the propoxylation reaction an amount of 1.5 g of N,N-dimethylcyclohexyl amine (DMCHA) - commercial product - were used as catalyst. About 355 g. of polyester-ether polyol P3, light brown-yellow coloured, were obtained.

### Example 4

The procedure followed in Example 1 was repeated, except that 204,4 g (1,4 moles) 1,4:3,6-dianhydro sorbitol (isosorbide) (IS) - commercial product - were used in the glycolysis reaction, the amount of calalyst used was 1.34 g (1.4 ml), the reaction time was 6 h., the amount of PA used for the esterification reaction was 414.4 g (2.8 moles), the Acid number of the reaction mixture, after the esterification reaction, was of about 203 mg KOH/g., the amount of PO used in the propoxylation reaction was about 200 g (240 ml) and the amount of catalyst DMCHA was 1.5 g. About 420 g of polyester-ether polyol P4, light brown coloured, were obtained.

### Example 5

The procedure followed in Example 4 was repeated, except that the amount of PA used in the esterification reaction was 148 g (1 mole), and the Acid number of the reaction mixture, after the esterification reaction, was of about 108 mg KOH/g. About 490 g of polyester-ether polyol P5, light brown coloured, were obtained.

### Example 6

The procedure followed in Example 4 was repeated, except that the glycolysis reaction was followed by the propoxylation reaction (no PA was added) and the propoxylation reaction took place at a work pressure of 3-5 atm., using about 266 g (320 ml.) PO and 3 g. of catalyst. About 545 g polyester-ether polyol P 6, light brown coloured, were obtained.

### Comparative example

A stainless steel polycondensation reactor of 1000 cm³ capacity, fitted with a jacket with electrically heated agent, temperature controller, anchor stirrer with 60-70 rpm. speed, nitrogen gas-introducing tube, manometer, and heated partial reflux condenser, connected to a distillate collecting vessel, was charged with 121,9 g (1,15 moles) DEG, 288,1g (2,15 moles) DPG and 0,192 g (0,2 ml) tetraisopropyl titanate, catalyst. The condenser was heated to a temperature of 100 -120 °C and, under inert atmosphere (nitrogen), the reaction mixture was heated to 100 °C. 192 g (1 mole) PET waste flakes derived from post-consuming bottles were charged, with the following main physical-chemical characteristics: granulation ∼ 5 / 5 mm, molecular weight ∼ 40,000, melting range 254-260°C, I _{OH}: 2.5 - 3 mg KOH / g, moisture < 0 2% and 148 g (1 mole) PA. Temperature was gradually rised in about 6 h at 240°C, while, starting at 190 °C, about 31 ml (32,5 g) mixture of water resulting from the reaction and glycols distilled off. The reaction mixture was further maintained at 240°C for about 2 h, until an Acid number less than 1,2 mg KOH/g was attained. About 700 g polyester - ether polyol PE, brown-yellow coloured, were obtained.

The chemical composition, according to reactants proportion, and the physical-chemical properties of the polyester-ether polyols are highlighted in Table no. 1.

**Tabel no. 1**

| **Polyol code** | **Polyester-ether polyols composition Structural moieties deriving from:** | | | | | | | **Physical-Chemical Characteristics of Polyester-ether polyols** | | | | | | | |
|---|---|---|---|---|---|---|---|---|---|---|---|---|---|---|---|
| | **Di-carboxilic aromatic acids moles/ 1mol PET** | | **Diols, moles/1 mol PET** | | | | | **I_{A} mg KOH/g** | **I_{OH} mg KOH/ g** | **Mₙ calc.** | η, **cP** | | | **Water cont. %** | **Free glycols cont., %** |
| | **TA*** | **PA** | **EG**** | **DEG** | **DPG** | **IS** | **PG***** | | | | **25°C** | **50°C** | **70°C** | | |
| **P1** | 1 | 1 | I | 2 | 0 | 0 | 2,8 | 0,1 | 315 | 356 | 2030 | 265 | 77 | 0,23 | 9,8 |
| **P2** | 1 | 1 | 1 | 1,8 | 0 | 0 | 3,2 | 0,2 | 282 | 398 | 10272 | - | - | - | - |
| **P3** | 1 | | 1 | 1 | 1 | 0 | 2,3 | 0,2 | 316 | 355 | 3089 | 341 | 103 | 0,38 | 10,0 |
| **P4** | 1 | 2,8 | 1 | 0 | 0 | 1,4 | 7,3 | 0,2 | 127 | 883 | solid | - | 12500¹ | - | - |
| **P5** | 1 | 1 | 1 | 0 | 0 | 1,4 | 6,5 | 0,2 | 170 | 660 | - | 36202 | 3436 | - | - |
| **P6** | 1 | - | 1 | 0 | 0 | 1,4 | 5,9 | 0 | 213 | 527 | 69000 | 802 | 232 | - | - |
| **PE** | 1 | 1 | 1 | 1,15 | 2,15 | - | - | 1,2 | 341 | 328 | 3094 | - | - | 0,42 | 18,3 |

| | | | | | | | | | | | | | | | |
|---|---|---|---|---|---|---|---|---|---|---|---|---|---|---|---|
| *TA - terephthalic acid derived from PET ** EG - ethylene glycol derived from PET ***PG - 1,2 propylene gycol derived from PO, resulting from calculations, considering the Hydroxil number of the final polyester-ether polyols 1 determined at 75°C | | | | | | | | | | | | | | | |

The results obtained from polyester-ether polyols characterization by NMR spectroscopy allowed the estimation of free glycol content, molar ratio of oligomeric fractions of different weights, as well as structural moieties partition in different fractions and the manner they are linked to each other. The results are in good correlation with molar ratios of the reactants and the physical- chemical properties of the final products.

### Polyester-ether polyols evaluation in rigid polyurethane foams formation

The behavior of the polyester-ether polyols in the foaming process was evaluated according to the cup test method, free rise process, in a formulation for sandwich panel - discontinous process of rigid polyurethane foam formation -

The following characteristics were determined:
- reaction mixture's reactivity ;
- foams' physical -mechanical properties ;
- fire reaction

### Example 7

The polyester-ether polyols prepared according to Examples 1, 2, 4 and PE were tested using the following formula:

| | |
|---|---|
| Petol PZ 400-5G - | 50 pbw. |
| P Polyester-ether polyol* - | 30 pbw. |
| Petol PM 500-3F - | 20 pbw. |
| Tegostab 8461 - | 1,5 pbw. |
| TCPP - | 12 pbw. |
| N,N-dimethyl cyclohexyl amine - | 0,4 pbw. |
| N,N-dimethylethanol amine- | 0,6 pbw. |
| Water- | 3 pbw. |
| HFC 365 mfc/227 ea - | 20 pbw. |
| Crude MDI Index - | 110 |

### Example 8

The polyester-ether polyols prepared according to Examples 6 and 7 were tested using the following formula:

| | |
|---|---|
| Petol PZ 400-4G - | 50 pbw. |
| P Polyester-ether polyol* - | 30 pbw. |
| Petol PM 500-3F - | 20 pbw. |
| Glycerol - | 2 pbw. |
| Tegostab 8461 - | 1,7 pbw. |
| TCPP- | 15 pbw. |
| N,N-dimethylcyclohexyl amine- | 0,8 pbw. |
| Water- | 3 pbw. |
| HFC 365 mfc/227 ea: | 20 pbw. |
| Crude MDI index : | 110 |

| | |
|---|---|
| Note * P Polyester-ether polyol - according to the invention | |

The physical -mecanical and thermal characteristics of the rigid polyurethane foams are highlighted in Table no. 2.

**Table no. 2.**

| **Characteristics:** | **Standard determination** | **MU** | **Polyester-ether polyol code** | | | | |
|---|---|---|---|---|---|---|---|
| | | | **P 1** | **P 3** | **P 5** | **P 6** | **PE** |
| **Reactivity:** | Cup test | | | | | | |
| -cream time | | sec. | 20 | 20 | 20 | 18 | 23 |
| - gel time | | sec. | 84 | 83 | 80 | 88 | 79 |
| -rise time | | sec. | 120 | 110 | 98 | 105 | 110 |
| -tack free time | | sec. | 165 | 200 | 150 | 180 | 172 |
| | | | | | | | |

| **Foam properties:** | | | | | | | |
|---|---|---|---|---|---|---|---|
| -density | ISO 845 | Kg/m³ | 25,95 | 27,48 | 30,28 | 30,23 | 25,72 |
| -compression strenght | ISO 844 | KPa | 137 | 132 | 200 | 202 | 140 |
| -tensile strenght | | KPa | 177 | 266 | | | 173 |
| -flexural strenght | ISO 1209 | KPa | 375 | 512 | | | 285 |
| - dimensional stability.at: | ISO 2796 | | | | | | |
| • 24 h/+80°C | | % vol. | -1,2 | -0,7 | 0.7 | 0,6 | -1,3 |
| • 24h/-29°C | | % vol. | -0,6 | -0,3 | -0,34 | -1 | -0,9 |
| -fire reaction | ISO 3582 | | | | | | |
| • Burnt length | | mm. | 30 | 24,8 | 24 | 25 | 34,2 |
| • Extinguishing time | | sec. | 47 | 52 | 25 | 24 | 54,2 |

## Claims

1. A procedure of obtaining aromatic polyester-ether polyols, suitable for rigid polyurethane foams foams formation, using polyethylene terephthalate (PET) waste as raw material, **characterized in that** it consists of: (1) glycolysis of PET wastes from soft drink bottles with aliphatic polyols or polyoxyalkylene glycols with low molecular weights, at a molar ratio between polyols and PET of: 1.1 -2 :1, depending on the requested depolymerization degree of PET wastes, in presence of tetraisopropyl or tetrabutyl titanate catalysts, at a molar ratio reported to PET between 0.05 and 0.5%, at temperatures between 190-220°C and under atmospheric pressure, for 3-6 hours; (2) partial esterification of cyclic anhydrides of aromatic poly-carboxylic acids with glycolysis products resulted from the 1st reaction stage, at a molar ratio between anhydride and PET of 0 - 2.8 :1, at reaction temperatures between 120 and 140°C and under atmospheric pressure, to reach an acid number corresponding to complete esterification of a single carboxylic group (by anhydride ring opening addition); (3) alcoxylation of the reaction mixture obtained in stage (2), at a molar ratio between alkylene oxide and PET of 1- 10: 1, in presence of base catalysts (tertiary amines) used at a weight ratio of 0.5- 1% wt. based on esters mixture, at temperatures between 110 and 120 °C and under 2-5 atm. pressure, during 3-5 hours.

2. A procedure of obtaining aromatic polyester-ether polyols according to claim 1, wherein the polyols or polyoxyalkylene glycols with low molecular weights used for glycolysis of PET waste can be ethylene glycol, 1,2- propylene glycol, glycerol, diethylene glycol, dipropylene glycol or mixtures thereof, the transesterification catalyst can be preferably tetrabutyl, tetraisopropyl titanate or mixtures thereof, at a molar ratio of 0.05 - 0.08 % based on PET, glycolysis time is 3-4 hours, the respective anhydrides of aromatic polycarboxylic acids used for glycolysis products' monoesterification can be phthalic anhydride, trimellitic anhydride or mixtures thereof, at a molar ratio between anhydride and PET of 0.01- 2 :1, the alkylen oxides used for alcoxylation of the resulting products from the esterification reaction can be ethylene oxide, propylene oxide or their mixtures, at molar ratio between alkylene oxide and PET of 1 - 6 :1, in order to achieve a requested hydroxyl number, in presence of base catalysts (tertiary amines) that can be dimethylcyclohexil amine or 1,4-diazabicyclo-[2,2,2] octane (DABCO), used at a concentration of 0.5% wt. based on the esters mixture.

3. A procedure of obtaining aromatic polyester-ether polyols according to claim 1, wherein the polyol used for glycolysis of PET waste is 1,4:3,6-dianhydrosorbitol (isosorbide), the transesterification catalysts can be, preferentially, tetraisopropyl or tetrabutyl titanate, in mol. ratio of 0,5 % based on PET, the glycolysis reaction time is 6 h, the respective aromatic polycarboxilic anhydrides used for the monoesterification of glycolysis products can be phthalic anhydride, trimellitic anhydride or mixtures thereof, in a mol. ratio between anhydride and PET of 0 - 2,8 : 1, the alkylene oxides used for alkoxylation of the products resulted from the esterification reaction can be ethylene oxide, propylene oxide, or mixtures thereof, in a mol. ratio between alkylene oxide and PET of 4- 10 : 1, so that the requested hydroxyl number is attained, using base catalysts (tertiary amines), which can be dimethyl cyclohexyl amine or 1,4-diazabicyclo[2,2,2]octane, in a ratio of 0,5-1 % wt., based on the ester mixture.

4. A procedure of obtaining aromatic polyester-ether polyols according to claim 1, wherein the products obtained by respective procedure exhibit hydroxyl numbers ranging between 120 - 320 mg KOH/g, acid number less than 0,2 mg KOH/g, water content less than 0,5 % wt. and free glycols with low molecular weight content less than 10 % wt., while no by product or waste result from the synthesis reactions, in any reaction stage.

5. Aromatic polyester-ether polyols, obtained by a procedure according to claim 3, **characterized in that** said aromatic polyester-ether polyols contain: terephthalic moieties ranging between 25 to 100 % mol., based on total acid component, other aromatic di or poly-carboxilic acids moieties ranging between 0 to 75 % mol. based on total acid component, ethylene glycol moieties ranging between 8 to 15 % mol. based on total glycolic component, other linear or branched aliphatic diols or polyoxyalkylen glycols with low molecular weight moieties ranging from 60 to 80 % mol. based on total glycolic component, and 1,4:3,6-dianhydrosorbitol (isosorbide) moieties ranging from 10 to 18 % mol. based on total glycolic component, out of which minimum 60% mol. of structural units having at least one hydroxyl group esterified with aromatic di or polycarboxylic acids.

6. Aromatic polyester-ether polyols according to claim 5, **characterized in that** said aromatic polyester-ether polyols present average molecular weight less than 1000 g/mol, Hydroxyl number ranging between 120 and 220 mg. KOH/g, Acid number less than 0,2 mg KOH/g, water content less than 0,5 % wt. and free glycol with low molecular weight content less than 10 % wt.

7. Aromatic polyester-ether polyols according to claim 6, **characterized in that** said aromatic polyester-ether polyols are compatible with polyether-polyols commonly used for rigid polyurethane foams, forming with the latter polyols homogenous and stable long lasting mixtures, and can be used in rigid polyurethane foams formulations in a ratio up to 30 % wt., based on polyolic component, leading to improvement of some rigid polyurethane foams' physical-mechanical properties.
